# EUROPEAN PATENT SPECIFICATION

(11) **EP 3 538 731 B1**
(45) Date of publication and mention of the grant of the patent: **02.08.2023**
(21) Application number: 17798296.4
(22) Date of filing: 10.11.2017
(51) Int. Cl.: E06B 3/70, E06B 5/16, B32B 37/00

(54) **PANELS**
PLATTEN
PANNEAUX

(30) Priority: 10.11.2016 GB 201619019; 06.07.2017 GB 201710908
(43) Date of publication of application: 18.09.2019
(73) Proprietor: Millard, Simon, Birmingham, West Midlands B74 3AP (GB)
(72) Inventor: Millard, Simon, Birmingham, West Midlands B74 3AP (GB)
(74) Representative: HGF
(86) International application number: PCT/GB2017/053398
(87) International publication number: WO 2018/087562

(56) References cited:
- EP-A2- 0 272 454
- DE-A1- 2 031 695
- DE-U1-202010 009 565
- GB-A- 2 367 850
- GB-A- 2 528 668

## Description

This invention relates to composite panels in general and to doors made from said composite panels.

Traditionally doors have been made out of timber or plastics materials. Timber is a very robust material which is readily worked and formed but it is expensive and heavy, especially where a thick external door is required. Plastics materials (for example PVCu) are much cheaper but can be perceived to be flimsy in comparison.

Various other plastics materials have been proposed for the formation of doors, such as thermoset materials which tend to be more robust than thermoplastics like PVC but are usually more expensive.

There has been a need and desire to seek other materials for the formation of doors and aluminium has been proposed as a candidate. However, to date the uptake of aluminium doors has been slow in the UK market due to expense and issues with supply.

Accordingly, there is a need for a robust aluminium door which can be formed easily and from readily available materials. There is also a need for a door which is capable of providing a high degree of security. There is a need for a process which enables a manufacturer to form doors of various sizes and configurations quickly and easily.

EP0272454 discloses a lightweight construction element for a vehicle door. GB2367850 discloses a door panel which includes a stress absorption portion that is arranged to absorb stress in an outer skin caused by thermal expansion and contraction. DE2031695 discloses a composite door having a metal frame.

Panels have been used to provide all sorts of cladding materials, building materials (roof, ceilings, floors, walls for example), decorative materials and separating structures and so on.

Accordingly, it is an object of this invention to provide a composite panel which can satisfy current and future demands.

A first aspect of the invention provides a composite panel according to Claim 1.

In this specification "structural sheet material" means that a sheet material which is sufficiently rigid to be self-supporting and "structural foam" is a closed or open cell foam with a density in excess of 20 kg/m³for example in excess of 30 kg/m³, 40 kg/m³, 50 kg/m³, 60 kg/m³, 70 kg/m³ or 80 kg/m³ and preferably less than 1000 kg/m³ for example less than 900 kg/m³, 800 kg/m³, 700 kg/m³, 600 kg/m³, 500kg/m³ or 400 kg/m³.

Preferably the first facia and/or the second fascia are formed from aluminium. The metal core layer may be formed from aluminium or steel or another suitable metal, for example, zinc. The first fascia, second fascia and/or the metal core may be a plain sheet or may be shaped, for example by cold rolling, knurling or embossing to provide local formations across all or a portion of the sheet material. In particular, the outermost surfaces may be provided with a surface decoration and/or may be shaped by a metal processing technique.

A suitable technique for forming the core layer and/or one or both of the first and second fascia may be provided by EP2091674.

In an embodiment the first fascia is from 0.5 to 50mm thick, for example from 0.5 to 45mm thick, 0.5 to 40mm thick, 0.5 to 35mm thick, 0.5 to 30mm thick, 0.5 to 25mm thick or 0.5 to 20mm thick, 0.5 to 15mm thick, 0.5 to 10mm thick, 0.5 to 5mm thick and may be from 0.5 to 4mm thick, the second fascia is from 0.5 to 50mm thick, for example from 0.5 to 40mm thick, 0.5 to 30mm thick, 0.5 to 20mm thick, 0.5 to 10mm thick, 0.5 to 5mm thick or 0.5 to 4mm thick. Preferably the first fascia is as thick or thicker than the second fascia. Preferably the first fascia, where the composite panel is configured to provide an external, fire or security door or panel, is configured to provide the external or secure fascia. In embodiments, the first and/or second structural foam layer may be formed of or may comprise a fire resistant or fire retardant foam material.

The core layer may extend across the entirety or some of the composite panel. Alternatively the core layer may extend across a major portion or a minor portion of the composite panel. For example, in a direction measured parallel to the principal plane of the core layer, the core layer may extend across less than 50%, 50% or more than 50% of the composite panel, for example across 100% of the composite panel. In embodiments the core layer may be located at each of the transverse peripheral edges of the composite panel and each may extend inwardly by up to 10% of the width of the composite panel, for example up to 15%, 20%, 25%, 30%, 35%, 40%, 45%, 50%. If both extend by 50% across the panel the core layer may be conveniently provided as a unitary layer.

Each of the structural foam layers may be formed from polyethylene terephthalate, polyurethane, acrylonitrile-butadiene-styrene (ABS), polystyrene (PS), polycarbonate (PC), polypropylene (PP) or polyvinyl chloride (PVC) and mixtures of the same.

In embodiments the first structural foam layer is thicker, the same thickness or thinner than the second structural foam layer.

In embodiments the density of the first structural foam layer is greater, the same or smaller than that of the second structural foam layer.

Preferably the first structural foam layer, where the composite panel is configured to provide an external, fire or security door or panel, is configured to be located towards the external surface of the door or panel.

The panel may have a first peripheral edge for mounting of hinges.

One or both of the first structural foam layer or the second structural foam layer may comprise inserts for the retention of fixing means, such as screws. The inserts may be located at the peripheral edge. The inserts may be formed of or may comprise metal, for example aluminium, or plastic, carbon fibre or fibre glass.

The peripheral edge may comprise one or more foam inserts. The foam inserts may extend along the peripheral edge, at least in the region where hinges are required. The foam inserts may have a density higher than that of the either the first or second structural foam layers.

The composite panel may comprise a trim extending over the panel, for example over one, two, three or all of the peripheral edges of the panel. The trim may comprise a plain section adhered to the peripheral edge. Alternatively, the trim may comprise a U-section, wherein the legs of the U-section embrace the terminal portions of the first and/or second fascias in the region of the peripheral edge. Alternatively, the trim may comprise a L-section or a Z-section. The trim may comprise an extension portion, extending within the first structural foam layer or the second structural foam layer or between the first structural foam layer and the second structural foam layer. The core layer may extend from the trim.

The trim may be composed of carbon fibre, but may also be composed of an alternative material such as metal, for example aluminium or steel, or plastic or fibre glass. The trim may be or may comprise material which is fire retardant. The trim may be formed by one or more of cold rolling, hot rolling, moulding, extrusion or pultrusion.

The first fascia and/or the second fascia and/or trim may be provided with a decorative or functional coating. The first fascia and/or the second fascia and/or trim may be embossed, painted, powder coated, covered or otherwise finished to provide a desired surface.

The second fascia may be composed of a metal, for example aluminium or steel, or glass, fibre glass, wood, rubber, cork, plastic, carbon fibre or another composite material.

A yet further aspect of the invention provides a method of forming a composite panel according to Claim 13.

In steps b) and d) the securing may be achieved using an adhesive and/or by heating the second structural sheet member.

Further layers of structural foam and/or structural sheet member may be provided to provide a thicker composite panel. The composite panel may be shaped to form a door, a door frame, a window frame, a structural frame.

The composite panel may also be used as a door. Additionally the composite panel may be employed as a construction material. The composite panel may be used, for example, as flooring, ceilings and/or external and/or internal walls in building construction. The composite panel may be used as, or as a component of, external cladding for use in building construction and/or insulation. The composite panel may be used as a construction material in the manufacture of aircraft, trains and/or other vehicles.

The composite panel may be used as a construction material with fire resistant or fire retardant properties. For example, as a fire door, or fire resistant or fire retardant external cladding, by selecting a structural foam that is fire resistant or fire retardant for use in manufacturing the composite panel.

The structural sheet member need not extend across the entirety of the facing structural foam layer.

In each embodiment, the composite panel may be provided with a first or second fascia which is formed of a metal structural sheet material and the other of the second or first fascia comprises, or is provided with a covering of, a non-structural and/or decorative material. The non-structural and/or decorative material may be formed of plastics, composites, ceramics, carbon fibre, fibre-glass, timber, cork, hard or soft wood, laminates, cloth, textile, rubber.

Inserts may be located within one, both, some or all of the structural foam layers. The inserts may be located by fusion bonding, adhesive or *in situ* foaming, or other methods known to the skilled addressee.

In order that the invention may be more fully understood, it will now be described, by way of example only, and with reference to the accompanying drawings, in which:
Figure 1 is an elevation of a door according to the invention
Figure 1A is an enlarged view of a portion of the door of Figure 1
Figure 2 is an enlarged view of a second embodiment of a portion of the door of Figure 1
Figure 3 is an enlarged view of a third embodiment of a portion of the door of Figure 1;
Figure 4 is an enlarged view of a portion of the door of Figure 1;
Figure 5 is an enlarged view of a further embodiment of a portion of the door of Figure 1;
Figure 6 is an enlarged view of a further embodiment of a portion of the door of Figure 1;
Figure 7 is an enlarged view of a further embodiment of a portion of the door of Figure 1;
Figure 8 is an elevation of a machined door according to the invention;
Figure 9 is a sectional view of a window fitted within the door of Figure 8;
Figure 10 is an enlarged view of a second embodiment of the door of Figure 8;
Figure 11 is a plan view of a surface finished portion of a door according to the invention; and
Figure 12 is an enlarged view of a further embodiment of a portion of the door of Figure 8.

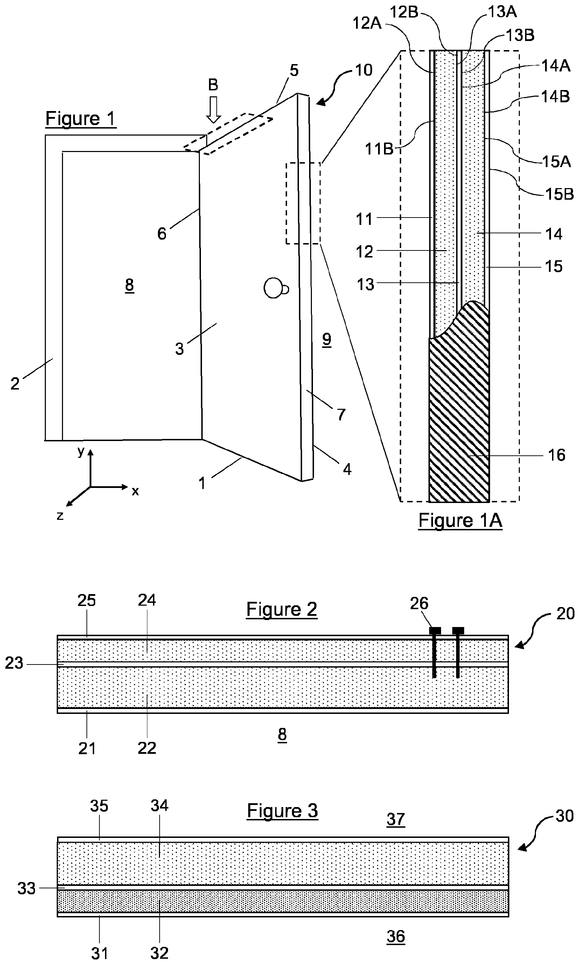

Referring first to Figure 1 there is shown a door 10 according to the invention. The door 10 may be an external door fitted with hinges (not shown) hung to a door frame 2. The door 10 has an outer surface 3, an inner surface 4, a top peripheral edge 5, an inner peripheral edge 6 and an outer peripheral edge 7. If the door 10 is to be hung as an external door the outer surface 3 will face the external environment 8 whilst the internal surface 4 will face the internal environment 9.

Referring now to Figure 1A there is shown an enlarged view of a portion of the door 10 showing a part of the outer peripheral edge 7 of door 10. The door 10 has a sandwich structure comprising a first outer fascia 11, a first structural foam layer 12, a core layer 13, a second structural foam layer 14, and a second outer fascia 15. The first outer fascia 11 forms (or is adjacent) the outer surface 3 of the door 10, which may face the external environment 8. The opposite surface 11B of the first outer fascia 11 is secured to a major surface 12A of the first structural foam layer 12, an opposite surface 12B of which is secured to a first major surface 13A of the core layer 13. The core layer 13 forms a layer at or towards the centre of the door 10. The core layer 13 is sandwiched between the first structural foam layer 12 and the second structural foam layer 14. A second major surface 13B of the core layer 13 is secured to a first major surface 14A of the second structural foam layer 14, an opposite surface 14B of which is secured to a first major surface 15A of second outer fascia 15. A second major surface 15B of the outer fascia 15 forms (or lies adjacent) the inner surface 4 of the door 10, which faces the internal environment 9 of a building. The door 10 may be capped with a trim 16, which is secured to the exposed terminal edges of layers 11 to 15 around the entire periphery of the door 10, that is, along the outer peripheral edge 7 in addition to the top peripheral edge 5 and preferably the inner peripheral edge 6 and bottom edge 1 of the door 10. For clarity, only a portion of the trim 16 is shown in Figure 1A and the remainder has been omitted to reveal the layers 11 to 15 of door 10. In this embodiment, the layered structure described is uniform throughout the door 10 at every cross section.

Preferably, the first outer fascia 11, the second outer fascia 15, and the core layer 13 are composed of metal. More preferably, the first outer fascia 11, the second outer fascia 15, and the core layer 13 are composed of aluminium. Preferably, the first structural foam layer 12 and the second structural foam layer 14 are composed of a closed cell thermoplastic polymer foam. More preferably, first structural foam layer 12 and the second structural foam layer 14 are composed of closed cell polyethylene terephthalate (PET) polymer foam.

We have found that a door formed in accordance with Figure 1A and having the following characteristics was eminently suitable for use as an exterior door 10:

| | | **Dimensions of Each Layer (mm)** | | |
|---|---|---|---|---|
| **Example** | **Layer** | **Height** | **Width** | **Depth** |
| **1a** | First outer fascia 11 | 1981 | 762 | 2 |
| | First structural foam layer 12 | 1981 | 762 | 15 |
| | Core layer 13 | 1981 | 762 | 2 |
| | Second structural foam layer 14 | 1981 | 762 | 15 |
| | Second outer fascia 15 | 1981 | 762 | 1 |
| | **Dimensions of Door 10 (mm)** | **1981** | **762** | **35** |
| **1b** | First outer fascia 11 | 1981 | 838 | 3 |
| | First structural foam layer 12 | 1981 | 838 | 17 |
| | Core layer 13 | 1981 | 838 | 2 |
| | Second structural foam layer 14 | 1981 | 838 | 17 |
| | Second outer fascia 15 | 1981 | 838 | 1 |
| | **Dimensions of Door 10 (mm)** | **1981** | **838** | **40** |
| **1c** | First outer fascia 11 | 2032 | 813 | 4 |
| | First structural foam layer 12 | 2032 | 813 | 20 |
| | Core layer 13 | 2032 | 813 | 2 |
| | Second structural foam layer 14 | 2032 | 813 | 20 |
| | Second outer fascia 15 | 2032 | 813 | 1 |
| | **Dimensions of Door 10 (mm)** | **2032** | **813** | **47** |

| | | **Specification of Structural Foam Layers 12 and 14 in Examples 1a-1c** | | | | |
|---|---|---|---|---|---|---|
| **Example** | **Structural Foam Layer** | **Material** | **Density (kg/m³)** | ***CS (N/mm²)** | ***TS (N/mm²)** | ***SS (N/mm²)** |
| **1a** | 12 | PET | 93-107 | 1.4 | 2.0 | 0.8 |
| | 14 | PET | 93-107 | 1.4 | 2.0 | 0.8 |
| **1b** | 12 | PET | 93-107 | 1.4 | 2.0 | 0.8 |
| | 14 | PET | 93-107 | 1.4 | 2.0 | 0.8 |
| **1c** | 12 | PET | 103-117 | 1.6 | 2.3 | 0.9 |
| | 14 | PET | 103-117 | 1.6 | 2.3 | 0.9 |

| | | | | | | |
|---|---|---|---|---|---|---|
| *CS = Compressive strength perpendicular to plane x; TS = Tensile strength perpendicular to plane x; SS = Sheer strength crosswise. | | | | | | |

As shown in Examples 1a-1c, the structural foam layers 12 and 14 may be composed of a closed-cell thermoplastic foam, such as polyethylene terephthalate (PET), with a density of, for example, say between 90 kg/m³ and 120 kg/m³. The structural foam layers 12 and 14 within door 10 provide a lightweight structure whilst also possessing high mechanical properties. For example, the structural foam layers of Examples 1a-1c possess a compressive strength perpendicular to plane x of the door 10 of between 1.4 N/mm² and 1.6 N/mm², a tensile strength perpendicular to plane x of the door 10 of between 2.0 N/mm² and 2.3 N/mm², and a sheer strength crosswise of between 0.8 N/mm² and 0.9 N/mm².

Advantageously, the load bearing capacity of the structural foam layers 12 and 14 allows the door 10 to be directly mounted to a door frame 2 using hinges, by screwing directly into the structural foam layers 12 and 14. Advantageously, the structural foam layers 12 and 14 are fatigue resistant, chemically stabile, and have negligible water absorption. These advantageous properties provide a door 10, which is resistant to the weather elements as well as cleaning products.

We have found that the presence of the core layer 13 confers additional strength and stability to the door 10, which provides greater resistance to warping or bending. Advantageously, the strength of the layered structure of the door 10 allows a thinner layer of metal to be used for the second outer fascia 15, in comparison to the first outer fascia 11, which reduces the weight of the door and the cost.

The rigidity and added physical resilience afforded to the door 1 by the presence of the core layer 13 is also beneficial. The core layer 13 is as thick or thicker than the second outer fascia 15 and as thin or thinner than the first outer fascia 11.

Referring now to Figure 2 there is shown an enlarged view of a second embodiment of the door 20 of Figure 1. The door 20 comprises the following layers, which are secured successively in a sandwich structure in the following order: (i) first outer fascia 21; (ii) first structural foam layer 22; (iii) core layer 23; (iv) second structural foam layer 24; and (v) second outer fascia 25. In this embodiment, the first outer fascia 21 forms the outer surface 3 of the door 20, and the second outer fascia 25 forms the inner surface 4 of the door 20.

We have found that a door formed in accordance with Figure 2 and having the following characteristics was eminently suitable for use as an external or internal door:

| | | | **Dimensions of Each Layer (mm)** | | | |
|---|---|---|---|---|---|---|
| **Example** | **Layer** | | **Height** | | **Width** | **Depth** |
| **2a** | First outer fascia 21 | | 1981 | | 762 | 2 |
| | First structural foam layer 22 | | 1981 | | 762 | 20 |
| | Core layer 23 | | 1981 | | 762 | 2 |
| | Second structural foam layer 24 | | 1981 | | 762 | 10 |
| | Second outer fascia 25 | | 1981 | | 762 | 1 |
| | **Dimensions of Door 20 (mm)** | | **1981** | | **762** | **35** |
| **2b** | First outer fascia 21 | | 1981 | | 838 | 2 |
| | First structural foam layer 22 | | 1981 | | 838 | 25 |
| | Core layer 23 | | 1981 | | 838 | 2 |
| | Second structural foam layer 24 | | 1981 | | 838 | 5 |
| | Second outer fascia 25 | | 1981 | | 838 | 1 |
| | **Dimensions of Door 20 (mm)** | | **1981** | | **838** | **35** |
| **2c** | First outer fascia 21 | | 2032 | | 813 | 4 |
| | First structural foam layer 22 | | 2032 | | 813 | 28 |
| | Core layer 23 | | 2032 | | 813 | 2 |
| | Second structural foam layer 24 | | 2032 | | 813 | 10 |
| | Second outer fascia 25 | | 2032 | | 813 | 1 |
| | **Dimensions of Door 20 (mm)** | | **2032** | | **813** | **45** |
| **2d** | First outer fascia 21 | | 1981 | | 838 | 2 |
| | First structural foam layer 22 | | 1981 | | 838 | 25 |
| | Core layer 23 | | 1981 | | 838 | 2 |
| | Second structural foam layer 24 | | 1981 | | 838 | 5 |
| | Second outer fascia 25 | | 1981 | | 838 | 1 |
| | **Dimensions of Door 20 (mm)** | | **1981** | | **838** | **35** |

| | | **Specification of Structural Foam Layers 22 and 24 in Examples 2a-2d** | | | | |
|---|---|---|---|---|---|---|
| **Example** | **Structural Foam Layer** | **Material** | **Density (kg/m³)** | ***CS (N/mm²)** | ***TS (N/mm²)** | ***SS (N/mm²)** |
| **2a** | 22 | PET | 103-117 | 1.6 | 2.3 | 0.9 |
| | 24 | PET | 103-117 | 1.6 | 2.3 | 0.9 |
| **2b** | 22 | PET | 93-107 | 1.4 | 2.0 | 0.8 |
| | 24 | PET | 93-107 | 1.4 | 2.0 | 0.8 |
| **2c** | 22 | PET | 93-107 | 1.4 | 2.0 | 0.8 |
| | 24 | PET | 93-107 | 1.4 | 2.0 | 0.8 |
| **2d** | 22 | PET | 93-107 | 1.4 | 2.0 | 0.8 |
| | 24 | PET | 103-117 | 1.6 | 2.3 | 0.9 |

| | | | | | | |
|---|---|---|---|---|---|---|
| *CS = Compressive strength perpendicular to plane x; TS = Tensile strength perpendicular to plane x; SS = Sheer strength crosswise. | | | | | | |

As shown in Examples 2a-2d, the structural foam layers 22 and 24 have an identical specification to those disclosed in Examples 1a-1c, differing only in their dimensions. The first structural foam layer 22 has a greater depth compared to the second structural foam layer 24, within the door 20. Advantageously, this confers additional heat insulating capabilities on the door 20, especially in the case that the first outer surface 21 surfaces an external environment 8 with a temperature lower than that of the internal environment (or vice versa).

Advantageously, this also provides a facile method of manufacturing doors of different depths or thicknesses, which may be required depending on the frame size provided.

Advantageously, the higher density foam of the second structural foam layer 24 may act as a reinforced attachment point for hinges and door furniture. More advantageously, the use of a thinner second structural foam layer 24 with high mechanical properties provides the ability to affix screws directly through the second outer fascia 23, which faces the internal environment 9, the second structural foam layer 24 and the core layer 23. This provides a greatly reinforced attachment point, which traverses three layers of the composite door 20, and also reduces the quantity of relatively expensive and heavy high density foam that is used for first structural foam layer 22.

Referring now to Figure 3 there is shown an enlarged view of a third embodiment of a portion of the door 30 of Figure 1. The door 30 comprises the following layers, which are secured successively in a sandwich structure in the following order: (i) first outer fascia 31; (ii) first structural foam layer 32; (iii) core layer 33; (iv) second structural foam layer 34; and (v) second outer fascia 35. In this embodiment, the density of the first structural foam layer 32 is higher than that of the second structural foam layer 34.

We have found that a door 30 formed in accordance with Figure 3 and having the following characteristics was eminently suitable for use as a fire door:

| | | | | **Dimensions of Each Layer (mm)** | | | | | |
|---|---|---|---|---|---|---|---|---|---|
| **Example** | **Layer** | | | **Height** | | **Width** | | **Depth** | |
| **3a** | First outer fascia 31 | | | 1981 | | 762 | | 2 | |
| | First structural foam layer 32 | | | 1981 | | 762 | | 20 | |
| | Core layer 33 | | | 1981 | | 762 | | 2 | |
| | Second structural foam layer 34 | | | 1981 | | 762 | | 20 | |
| | Second outer fascia 35 | | | 1981 | | 762 | | 1 | |
| | **Dimensions of Door 30 (mm)** | | | **1981** | | 762 | | 45 | |
| **3b** | First outer fascia 31 | | | 1981 | | 838 | | 2 | |
| | First structural foam layer 32 | | | 1981 | | 838 | | 15 | |
| | Core layer 33 | | | 1981 | | 838 | | 3 | |
| | Second structural foam layer 34 | | | 1981 | | 838 | | 24 | |
| | Second outer fascia 35 | | | 1981 | | 838 | | 1 | |
| | **Dimensions of Door 30 (mm)** | | | **1981** | | 838 | | 45 | |
| **3c** | First outer fascia 31 | | | 2040 | | 726 | | 4 | |
| | First structural foam layer 32 | | | 2040 | | 726 | | 10 | |
| | Core layer 33 | | | 2040 | | 726 | | 2 | |
| | Second structural foam layer 34 | | | 2040 | | 726 | | 28 | |
| | Second outer fascia 35 | | | 2040 | | 726 | | 1 | |
| | **Dimensions of Door 30 (mm)** | | | **2040** | | 726 | | **45** | |

| | | **Specification of Structural Foam Layers 32 and 34 in Examples 3a-3c** | | | | |
|---|---|---|---|---|---|---|
| **Example** | **Structural Foam Layer** | **Material** | **Density (kg/m³)** | ***CS (N/mm²)** | ***TS (N/mm²)** | ***SS (N/mm²)** |
| **3a** | 32 | PET | 105-115 | 1.4 | 2.2 | 0.8 |
| | 34 | PET | 93-107 | 1.4 | 2.0 | 0.8 |
| **3b** | 32 | PET | 140-150 | 2.2 | 2.7 | 1.2 |
| | 34 | PET | 103-117 | 1.6 | 2.3 | 0.9 |
| **3c** | 32 | PET | 200-220 | 3.5 | 3.0 | 1.85 |
| | 34 | PET | 93-107 | 1.4 | 2.0 | 0.8 |

| | | | | | | |
|---|---|---|---|---|---|---|
| *CS = Compressive strength perpendicular to plane x; TS = Tensile strength perpendicular to plane x; SS = Sheer strength crosswise. | | | | | | |

As shown in Examples 3a-3c, the first structural foam layer 32 may be composed of a closed-cell thermoplastic foam, such as polyethylene terephthalate, with a density of, for example, say between 100 kg/m³ and 220 kg/m³. Additionally, the structural foam layer 32 possesses high mechanical properties, such as having a compressive strength perpendicular to plane x of the door 30 of between 1.4 N/mm² and 3.5 N/mm², a tensile strength perpendicular to plane x of the door 30 of between 1.5 N/mm² and 3.0 N/mm², and a sheer strength crosswise of between 0.8 N/mm² and 1.85 N/mm².

The second structural foam layer 34 may be composed of a closed-cell thermoplastic foam, such as polyethylene terephthalate, with a density of, for example, say between 93 kg/m³ and 117 kg/m³, a compressive strength perpendicular to plane x of the door 30 of between 1.4 N/mm² and 1.6 N/mm², a tensile strength perpendicular to plane x of the door 30 of between 2.0 N/mm² and 2.3 N/mm², and a sheer strength crosswise of between 0.8 N/mm² and 0.9 N/mm².

Alternatively, the Examples 3a-3c of door 30 may be used for the purpose of a fire door, which is intended to prevent fire spreading through a building. In this case, at least one of the structural foam layers 32 or 34 is selected to comprise a fire resistant or fire retardant component. Advantageously, only one structural foam layer, for example, the first structural foam layer 32, may have the fire resistant or fire retardant component. An example of a fire retardant structural foam is Airex^{®} T90 (RTM) available from Airex AG of Switzerland. This type of foam has superior fire retardance, and excellent fire, smoke and toxicity (FST) properties. However, other suitable fire retardant foams may also be used for manufacture of a suitable fire door such as those described in Examples 3a-3c.

Using Example 3c as an example fire door, the first outer fascia 31 faces the environment at high risk of fire 36, in which fire and smoke need to be contained. The second outer fascia 35 faces the low risk environment 37 that needs to be protected from fire and smoke. Advantageously, the use of a fire retardant structural foam layer 32 in door 30 provides a fire door, preferably a thin and lightweight fire door with excellent fire and smoke resistance properties. The first structural foam layer 32 is fire retardant and is of a higher density compared to the second structural foam layer 34. The second structural foam layer 34 need not have a fire-retardant component. The first structural foam layer 32 may also be thinner in comparison to the second structural foam layer 34, which greatly reduces the quantity and cost of the fire-retardant foam required to manufacture the door 30 of Example 3c.

The composite doors in all embodiments described are manufactured using a fusion bonding process, preferably in the absence of adhesives. By fusion bonding we mean heating a metal sheet to an elevated temperature and typically a temperature sufficient to melt a surface layer of the structural foam when the two are in close proximity, for example 260°C, then bringing the metal sheet into contact with the structural foam and adding pressure to bond the two surfaces, the melted surface layer of structural foam acting as the bonding agent to the metal sheet, and subsequently cooling the metal to produce the fusion bonded article. Advantageously, this process does not require adhesives, which can take up to 24 hours to cure. The structural foam described benefits from being thermally stable to high temperature during processing and post curing. Therefore, this process is both cost and time effective for the manufacture of lightweight composite doors with advantageous features such as fire retardance and enhanced load bearing capabilities.

In a method of manufacturing a composite panel for use as a door, a door frame or a window frame, using door 10 in Figure 1 as an example, the method comprises steps of: (a) Securing the first major surface 13A of a core layer 13 to the first major surface 12B of a first structural foam layer 12; (b) Securing the second major surface 13B of the core layer 13 to the first major surface 14A of a second structural foam layer 14; (c) Securing a major surface 11B of first outer fascia 11 to the second major surface 12A of the first structural foam layer 12 by fusion bonding; and (d) Securing a major surface 15A of second metal fascia 15 to a second major surface 14B of the second structural foam layer 14 by fusion bonding to result in the finished composite panel for use in door 10.

Additionally, the composite doors in all embodiments 10, 20, and 30 described above may be manufactured by using adhesives in addition to fusion bonding as defined in claim 1 and 13, which may be used to adhere each layer in the composite door 10, 20, and 30.

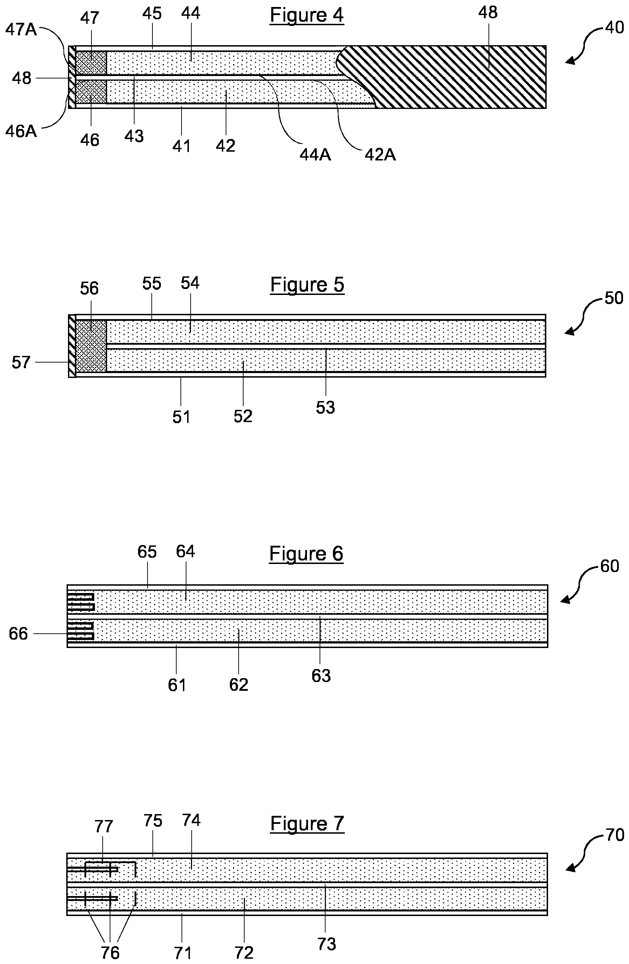

The door 10 of Figure 1, may have a consistent and identical cross sectional structure running throughout and across the door 10. Alternatively, and referring now to Figure 4 where there is shown an enlarged view of the door 40 similar to the door 10 of Figure 1 and viewed in the direction of arrow B, a portion of the top peripheral edge 5 of door 40 is shown. The door 40 comprises the following layers, which are secured successively in a sandwich structure in the following order: (i) first outer fascia 41; (ii) first structural foam layer 42; (iii) core layer 43; (iv) second structural foam layer 44; and (v) second outer fascia 45. In this example, there is a first structural foam insert 46 and a second structural foam insert 47, which abut the structural foam layers 42 and 44 respectively, and are separated by the core layer 43. The first and second structural foam inserts 46 and 47 are provided along the entire inner peripheral edge 6 of door 40.

The door 40 may be capped with a trim 48, which is secured to the exposed terminal edges of layers 41 to 45, and first and second structural foam inserts 46 and 47, along the top peripheral edge 5 and the inner peripheral edge 6, in addition to the outer peripheral edge 7 of the door 40. For clarity, only a portion of the trim 48 is shown in Figure 4 and the remainder has been omitted to reveal the layers 41 to 45 along the top peripheral edge 5 of door 40.

The first and second structural foam inserts 46 and 47 are composed of a higher density foam in comparison to the structural foam layers 42 and 44. Therefore, the higher density structural foam inserts 46 and 47 have high mechanical properties. Advantageously, this provides a door 40 with a reinforced area along the inner peripheral edge 6 for hanging to the door frame 2. This means that a lower density and therefore cheaper structural foam can be used in structural foam layers 42 and 44, making the door 40 lightweight and also is also less expensive to manufacture.

During the manufacture of the type of door 40 shown in Figure 4, the first structural foam insert 46 may be placed adjacent to the first structural foam layer 42 to form a continuous foam layer of equal depth. The first outer fascia 41 is secured to the resulting continuous foam layer comprised of both the first structural foam insert 46 and the first structural foam layer 42, in a fusion bonding process, or by using adhesives. This process is repeated, instead using the second structural foam insert 47 and the second structural foam layer 44, which are secured to the second outer fascia 45. The exposed major surfaces 42A, 44A, 46A and 47A of the structural foam layers 42 and 44, and structural foam inserts 46, 47 of each of the resulting components are then secured to the core layer 43, so that the core layer 43 is sandwiched between the exposed major surfaces 42A, 44A, 46A and 47A of the structural foam layers 42 and 44 and the structural foam inserts 46 and 47.

Alternatively, the first and second structural foam inserts 46 and 47 may also be secured within door 40 by taking a composite panel of any embodiment of door 40 described above, removing a corresponding portion of the first structural foam layer 42 by machining using a router or by any other means, and removing a corresponding portion of the second structural foam layer 44 using the same method. The first structural foam insert 46 may then be inserted into the vacant gap between the first outer fascia 41 and the core layer 43. The second structural foam insert 47 may then be inserted into the vacant gap between the second outer fascia 45 and the core layer 43, and secured using adhesive or in a fusion bonding process.

The trim 48 is secured to the top peripheral edge 5, inner peripheral edge 6, and outer peripheral edge 7 of door 40 using adhesive or other methods of attachment. The trim 48 may be composed of carbon fibre, but may also be composed of an alternative material such as metal, for example aluminium, or plastic.

Referring now to Figure 5 there is shown an enlarged view of another embodiment of a door 50 similar to that of Figure 1, which shows a portion of the top peripheral edge 5 of door 50. The door 50 comprises the following layers, which are secured successively in a sandwich structure in the following order: (i) first outer fascia 51; (ii) first structural foam layer 52; (iii) core layer 53; (iv) second structural foam layer 54; and (v) second outer fascia 55. In this embodiment, there is one structural foam insert 56, which abuts the terminal edges of first structural foam layer 52, the core layer 53, and the second structural foam layer 54. The structural foam insert 56 is provided along the entire inner peripheral edge 6 of door 50.

The door 50 may be capped with a trim 57, which is secured to the exposed terminal edges of layers 51 to 55, and structural foam insert 56, along the top peripheral edge 5 and the inner peripheral edge 6, in addition to the outer peripheral edge 7 of the door 50. For clarity, trim 57 is shown on the inner peripheral edge 6 of door 50 of Figure 5, but has been omitted from the top peripheral edge 5 for clarity. Advantageously, the addition of trim 48 in Figure 4 and trim 57 in Figure 5, which may be composed of carbon fibre, confers resistance to bowing or warping at the edges of the door 40 and 50.

We have surprisingly found that a door formed in accordance with Figure 4 and 5, and having the following characteristics was eminently suitable for use as a door with a reinforced area for anchoring screws:

| | | | | **Dimensions of Each Layer (mm)** | | | | |
|---|---|---|---|---|---|---|---|---|
| **Example** | **Layer** | | | **Height** | | **Width** | | **Depth** |
| **4a** | First outer fascia 41 | | | 1981 | | 762 | | 2 |
| | First structural foam layer 42 | | | 1981 | | 612 | | 20 |
| | First structural foam insert 46 | | | 1981 | | 150 | | 20 |
| | Core layer 43 | | | 1981 | | 762 | | 2 |
| | Second structural foam layer 44 | | | 1981 | | 612 | | 20 |
| | Second structural foam insert 47 | | | 1981 | | 150 | | 20 |
| | Second outer fascia 45 | | | 1981 | | 762 | | 1 |
| | **Dimensions of Door 40 (mm)** | | | **1981** | | **762** | | **45** |
| **4b** | First outer fascia 41 | | | 1981 | | 838 | | 2 |
| | First structural foam layer 42 | | | 1981 | | 738 | | 10 |
| | First structural foam insert 46 | | | 1981 | | 100 | | 10 |
| | Core layer 43 | | | 1981 | | 838 | | 2 |
| | Second structural foam layer 44 | | | 1981 | | 738 | | 20 |
| | Second structural foam insert 47 | | | 1981 | | 100 | | 20 |
| | Second outer fascia 45 | | | 1981 | | 838 | | 1 |
| | **Dimensions of Door 40 (mm)** | | | **1981** | | **838** | | **35** |
| **4c** | First outer fascia 41 | | | 2040 | | 726 | | 3 |
| | First structural foam layer 42 | | | 2040 | | 646 | | 20 |
| | First structural foam insert 46 | | | 2040 | | 80 | | 20 |
| | Core layer 43 | | | 2040 | | 726 | | 2 |
| | Second structural foam layer 44 | | | 2040 | | 646 | | 10 |
| | Second structural foam insert 47 | | | 2040 | | 80 | | 10 |
| | Second outer fascia 45 | | | 2040 | | 726 | | 1 |
| | **Dimensions of Door 40 (mm)** | | | **2040** | | **726** | | **36** |
| **5a** | First outer fascia 51 | | | 2040 | | 726 | | 2 |
| | First structural foam layer 52 | | | 2040 | | 626 | | 20 |
| | Single structural foam insert 56 | | | 2040 | | 100 | | 42 |
| | Core layer 53 | | | 2040 | | 626 | | 2 |
| | Second structural foam layer 54 | | | 2040 | | 626 | | 20 |
| | Second outer fascia 55 | | | 2040 | | 726 | | 1 |
| | **Dimensions of Door 50 (mm)** | | | **2040** | | **726** | | **45** |

| | | **Specification of Structural Foam Layers and Inserts 42, 44, 46, 47 in Examples 4a-4c and 52, 54, 56 in Example 5a** | | | | | | |
|---|---|---|---|---|---|---|---|---|
| **Example** | **Structural Foam Layer or Insert** | **Material** | **Density (kg/m³)** | | ***CS (N/mm²)** | | ***TS (N/mm²)** | ***SS (N/mm²)** |
| **4a** | 42 | PET | 93-107 | | 1.4 | | 2.0 | 0.8 |
| | 44 | PET | 93-107 | | 1.4 | | 2.0 | 0.8 |
| | 46 | PET | 127-143 | | 2.4 | | 2.6 | 1.3 |
| | 47 | PET | 127-143 | | 2.4 | | 2.6 | 1.3 |
| **4b** | 42 | PET | 105-115 | | 2.1 | | 2.4 | 1.05 |
| | 44 | PET | 93-107 | | 1.4 | | 2.0 | 0.8 |
| | 46 | PET | 200-220 | | 3.5 | | 3.1 | 2.0 |
| | 47 | PET | 127-143 | | 2.4 | | 2.6 | 1.3 |
| **4c** | 42 | PET | 93-107 | | 1.4 | | 2.0 | 0.8 |
| | 44 | PET | 103-117 | | 1.6 | | 2.3 | 0.9 |
| | 46 | PET | 127-143 | | 2.4 | | 2.6 | 1.3 |
| | 47 | PET | 310-330 | | 7.1 | | 4.5 | 3.5 |
| **5a** | 52 | PET | 93-107 | | 1.4 | | 2.0 | 0.8 |
| | 54 | PET | 103-117 | | 1.6 | | 2.3 | 0.9 |
| | 56 | PET | 310-330 | | 7.1 | | 4.5 | 3.5 |

| | | | | | | | | |
|---|---|---|---|---|---|---|---|---|
| *CS = Compressive strength perpendicular to plane x; TS = Tensile strength perpendicular to plane x; SS = Sheer strength crosswise. | | | | | | | | |

We have surprisingly found that the use of first and second structural foam inserts 46 and 47, and single structural foam insert 56, composed of a closed cell, thermoplastic polymer foam, such as polyethylene terephthalate, with a high density of, for example, say between 127 kg/m³ and 330 kg/m³, in accordance with Examples 4a-4c, and Example 5a in the above table, provide a reinforced area for attachment of screws and other door furniture, with high mechanical properties.

Advantageously, these features provide a reinforced inner peripheral edge 6, which increases the load bearing capabilities of the door 40 or 50 by providing a reinforced position for attachment of screws for hinges, used for mounting the door 40 or 50 to a door frame 2. This reinforced area is particularly advantageous for doors which will be opened and closed multiple times a day in buildings with heavy traffic.

Referring now to Figure 6 there is shown an enlarged view of a further embodiment of a door 60 similar to that shown in Figure 1, a portion in the direction of arrow B being shown. The door 60 comprises the following layers, which are secured successively in a sandwich structure in the following order: (i) first outer fascia 61; (ii) first structural foam layer 62; (iii) core layer 63; (iv) second structural foam layer 64; and (v) second outer fascia 65. In this embodiment, metal plugs 66 are embedded within the first structural foam layer 62 and the second structural foam layer 64. The metal plugs 66 can be embedded into the first and second structural foam layers 62 and 64 during the manufacturing process of the door 60, by drilling, machining or otherwise.

Referring now to Figure 7 there is shown an enlarged view of a further embodiment of a door 70 according to Figure 1, a portion in the direction of arrow B being shown. The door 70 comprises the following layers, which are secured successively in a sandwich structure in the following order: (i) first outer fascia 71; (ii) first structural foam layer 72; (iii) core layer 73; (iv) second structural foam layer 74; and (v) second outer fascia 75. In this embodiment, metal inserts 76 and extrusion inserts 77 are embedded within the first structural foam layer 72 and the second structural foam layer 74. The metal inserts 76 and extrusion inserts 77 are preferably embedded into the first and second structural foam layers 72 and 74 during the manufacturing process of the door 70, but may also be located by drilling, machining, or otherwise. The metal inserts 76 and extrusion inserts 77 may be inserted into the door 70 perpendicular to the plane of the door 70 or in parallel to the plane of the door 70.

Advantageously, the metal plugs 66, metal inserts 76 and extrusion inserts 77 provide a reinforced attachment point for inserting and securing screws within the structure of the door 70, for attachment of the door 70 to a frame 2 with a hinge, or for attaching other door furniture such as hooks.

Preferably the metal plugs 66, metal inserts 76 and extrusion inserts 77 are metal, for example, aluminium.

Whilst the above embodiments disclose various means for facilitating attachment of the door to a hinge engaging the inner peripheral edge of the door, they are not essential and may be omitted if the structural foam layers have sufficient pull-out strength to retain screws (or other attachment means) when the door is hung. Moreover where such means (46, 47; 56, 66, 76) are present each, or one or more of each (e.g. foam insert 56 and metal inserts 76), may be provided with any of the doors 10, 20, 30 of Figures 1 to 3.

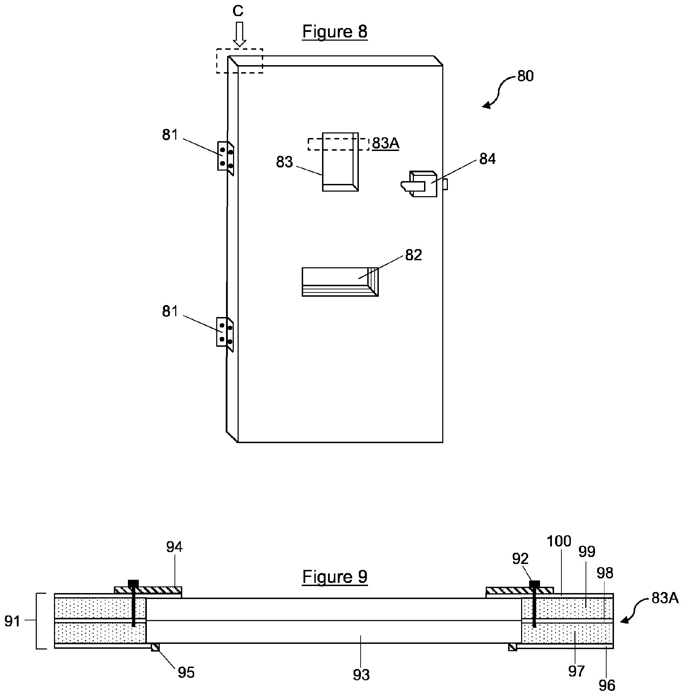

Referring now to Figure 8 there is shown a door 80 according to the invention, upon which door furniture has been mounted, for example, hinges 81, a letter box 82, a window 83, and a mortice lock 84. The door furniture 81-84 described above may be fitted to door 80 within compartments cut out of door 80 by machining using a router or other types of cutting equipment. Advantageously, the layers of all embodiments of the door 80 described above can be cut into quickly and cleanly at differing depths to remove the desired amount of material or number of layers. This type of machining affords sites on the door 80 for affixing door furniture such as hinges 81 and lock 84, in addition to handles, hooks, and signs. The lock 84 may be a mortice lock, however, a multipoint lock may also be deployed. Additionally, vacant spaces in door 80 can be made by machining, by removing all layers including outer fascias, core layers, and structural foam layers, which can be used as a letter box 82 or for glazing 83.

Referring now to Figure 9 there is shown a cross sectional view 83A of the glazing 83 fitted within a door 80 according to Figure 8. The glazing 83 comprises the composite panel 91 of door 80 and a glazing unit 93. The glazing unit 93 is sealed into the composite panel 91 with glazing profile 94 and sealant 95. The glazing profile 94 is secured to the composite panel 91 with the screws 92. The composite panel 91 comprises a first outer fascia 96, a first structural foam layer 97, a core layer 98, a second structural foam layer 99 and a second outer fascia 100. The composite panel 91 has been machined to remove an inner rectangular portion, which comprises portions of the first structural foam layer 97, the core layer 98, and the second structural foam layer 99. The glazing unit 93 is fitted to first outer fascia 96 and this is secured into the window 83 with the glazing profile 94 and the sealant 95. This provides an inexpensive and effective method for glazing a door 80.

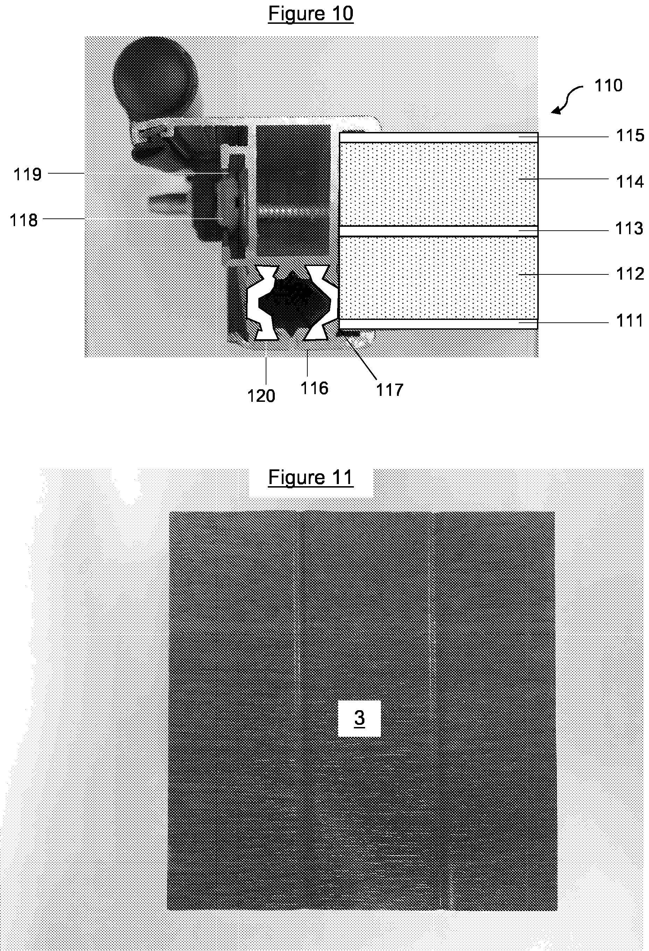

Referring now to Figure 10 there is shown an enlarged section of a door 110 similar to the door 80 of Figure 9 and viewed in the direction of arrow C. The door 110 comprises the following layers, which are secured successively in a sandwich structure in the following order: (i) first outer fascia 111; (ii) first structural foam layer 112; (iii) core layer 113; (iv) second structural foam layer 114; and (v) second outer fascia 115. In this embodiment a, preferably extruded, trim section 116 is secured to the exposed terminal edges of layers 111 to 115 along the inner peripheral edge 117 (and preferably around all of the edges of the panel). The trim section 116 is secured to the door 110 using a plurality of screws 118, which are embedded within the second structural foam layer 114. Advantageously, the trim section 116 contains a Eurogroove 119, which provides a reinforced attachment means for the door 110 to be hung by means of hinges to a door frame (not shown).

Additionally, the trim section 116 provides a thermal break 120 between the door 110 and the door frame (not shown), which reduces the flow of thermal energy between the door 110 and the door frame (not shown) to provide thermal insulation.

The trim section 116 also provides an additional securement means for the first outer fascia 111 and the second outer fascia 115 to the first structural foam layer 112 and the second structural foam layer 114 respectively, should the door 110 become damaged and the layers 111 to 115 become unsecured from one another.

Figure 11 shows a plan view of a portion of a door according to the invention, wherein the first fascia 3 has been cold rolled (pre or post formation of the door) to generate a tounge- and-groove effect. Moreover the external fascia 3 has been treated (pre or post formation of the door) to provide a wood-effect finish. Other finishes and shaping can be used to suit.

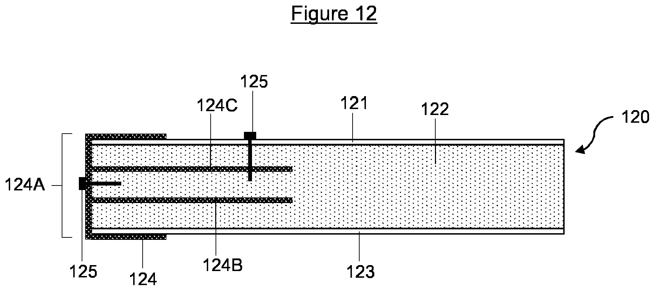

Figure 12 shows an enlarged view of a further embodiment of a door 120 according to Figure 8, a portion in the direction of arrow C being shown. The door 120 comprises the following components: (i) first outer fascia 121; (ii) structural foam layer 122; (iii) second outer fascia 123; and extruded trim and core layer section 124. In this embodiment, the extruded trim and core layer section 124 is formed as one integral member comprising a trim section 124A, a first core layer section 124B, and a second core layer section 124C.

The extruded trim and core layer section 124 may be secured to the door 120 by means of screws 125, adhesives (not shown) or other securement means. The core layer section 124B need not extend across the entire width of the door 120 and may terminate at a point in the middle of the structural foam layer 122. Additionally, there may only be one core layer section 124B provided as part of the extruded trim and core layer section 124. A plurality of core layer sections similar to 124B and 124C may also be provided as part of the extruded trim and core layer section 124, which may extend part of the width, or the full width of the door 120.

Advantageously, the extruded trim and core layer section 124 provides reinforced attachment point for inserting and securing screws 125 within the structure of the door 120, for attachment of the door 120 to a frame with a hinge, or for attaching other door furniture such as hooks.

The structural foam layers described in all embodiments may be polyethylene terephthalate, but may also be polyurethane, or any other suitable polymer capable of being manufactured into a structural foam layer. One example of a suitable structural foam for use as structural foam layers described in any embodiment above is Airex T10 or T92 (RTM), available from Airex AG.

Fire retardant structural foam layers described in all embodiments may Airex (RTM) T90 but may also be any other structural foam layer comprising a fire-retardant component and suitable for use in a fire door.

Preferably the outer fascias and core layers of all embodiments are metal, and more preferably they are aluminium.

The first and second outer fascias of the composite doors described in the above examples may be protected and aesthetically finished by painting, powder coating or by affixing a cosmetic fascia. Advantageously, this allows the composite doors of the above examples to be used in a variety of different environments and for a variety of different purposes.

The panels formed using the above methods can be converted to doors easily and readily. The manufacturing method provides a robust door which can be cut or trimmed and/or machined to size easily. Also, suitable door furniture or other adornments can be fitted. The panels can be machined to provide peripheral reinforcement, which although is only shown along one edge in the Figured (e.g. Figures 4 and 5) may actually extend around two, three or all of the peripheral edges or parts thereof.

The techniques disclosed above can be used to provide door frames 2 (Figure 1) and window frames by trimming sections to the appropriate dimensions, mitreing and jointing. In particular, fusion bonding can be deployed to join two mitred sections by using an intervening metal sheet. Alternatively, fusion bonding can be deployed to join two sections by welding two sections of foam together. Alternatively, sections can be joined by cleats or by mechanical fixtures. Alternatively, two sections can be welded together externally, for example via the first and second outer fascias, when both of the sections contain the fire retardant structural foam.

Moreover, the techniques disclosed above may also be used to provide a construction material. The composite panel may be used, for example, as (at least part of) roofs, flooring, ceilings and/or external and/or internal walls in building construction. The composite panel may be used as, or as a component of, external cladding for use in building construction and/or insulation. The composite panel may be used as a construction material in the manufacture of aircraft, trains and/or other vehicles.

## Claims

1. A composite panel comprising a first fascia (11) and a second fascia (15) at least one of which is formed from metal structural sheet material, located between the first and second fascia (11, 15) are a first structural foam layer (12), a metal core layer (13) and a second structural foam layer (14), the metal core layer (13) being as thin or thinner than the first fascia (11) and/or as thick or thicker than the second fascia (15) and **characterised in** the first fascia (11) is fusion bonded to the first structural foam layer (12) and the second fascia (15) is fusion bonded to the second structural foam layer (14).

2. A composite panel according to Claim 1, wherein at least two of the first facia (11), second fascia (15) and core layer (13) have different thicknesses.

3. A composite panel according to any of Claims 1 or 2, wherein the first structural foam layer (12) is thicker, the same thickness or thinner than the second structural foam layer (14).

4. A composite panel according to any of Claims, 1, 2 or 3, wherein the density of the first structural foam layer (12) is greater, the same or smaller than that of the second structural foam layer (14).

5. A composite panel according to any preceding Claim, wherein the first facia (11), the second fascia (15) and/or the metal core (13) is formed from aluminium.

6. A composite panel according to any preceding Claim, wherein the metal core (13) is selected from (i) a plain sheet or (ii) a shaped sheet, for example a sheet shaped by cold rolling, knurling or embossing to provide local formations across all or a portion of the sheet material.

7. A composite panel according to any preceding Claim, wherein the first fascia (11) is from 0.5 to 10 mm thick, e.g. from 0.5 to 4 mm thick and/or the second fascia 15 is from 0.5 to 20 mm thick, e.g. from 0.5 to 3 mm tick.

8. A composite panel according to any preceding Claim, wherein one or both of the structural foam layers (12, 14) is formed from a material selected from polyethylene terephthalate, polyurethane, acrylonitrile-butadiene-styrene (ABS), polystyrene (PS), polycarbonate (PC), polypropylene (PP) or polyvinyl chloride (PVC) and mixtures of the same.

9. A composite panel according to any preceding Claim, wherein one or both of the first structural foam layer (12) or the second structural foam layer (14) comprises inserts, e.g. foam inserts, for the retention of fixing means, such as screws.

10. A composite panel according to Claim 9, comprising a first peripheral edge for mounting of hinges, wherein the inserts may be located at or towards the peripheral edge and wherein the inserts may be foam inserts which extend along the peripheral edge, at least in the region where hinges are required and /or wherein the foam inserts may have a density higher than that of either or both of the first and second structural foam layers.

11. A composite panel according to any preceding Claim, further comprising a trim (16) extending around the panel, for example over one, two, three or all of the peripheral edges (5, 6, 7) of the panel.

12. A composite panel according to any preceding Claim, wherein one or both of the first fascia (11) and/or the second fascia (15) is provided with a decorative or functional coating.

13. A method of forming a composite panel according to any of the claims 1-12, the method comprising the steps of:
a. Heating a first structural sheet member (11) and bringing it into intimate contact with a first structural foam layer (12) whereby a first surface of the foam layer (12A) is melted to secure the first structural sheet member (11) to the first structural foam layer (12);
b. Providing a second structural sheet member (13) and bringing that into intimate contact with the first structural foam layer (12) to secure a second surface of the foam layer (12B) to the second structural sheet member (13);
c. Heating a third structural sheet member (15) and bringing it into intimate contact with a second structural foam layer (14) whereby a first surface of the second structural foam layer (14A) is melted to secure the third structural sheet member (15) to the second structural foam layer (14);
d. Securing the second structural sheet member (13) to the second structural foam layer (14).

14. A method according to Claim 13, wherein step b) comprises heating the second structural sheet member (13) and bringing that into intimate contact with the first structural foam layer (12) whereby a second surface of the foam layer (12B) is melted to secure the second structural sheet member (13) to the first structural foam layer (12).

15. A method according to any of Claims 13 or 14, wherein step d) comprises heating the second structural sheet member (13) and bringing it into intimate contact with the second structural foam layer (14) whereby a second surface of the second structural foam layer (14B) is melted to secure the second structural sheet member (13) to the second structural foam layer (14).

## Patentansprüche

1. Verbundplatte, umfassend eine erste Blende (11) und eine zweite Blende (15), von denen mindestens eine aus metallischem Strukturblechmaterial gebildet ist, wobei sich zwischen der ersten und zweiten Blende (11, 15) eine erste Strukturschaumschicht (12), eine Metallkernschicht (13) und eine zweite Strukturschaumschicht (14) befinden, wobei die Metallkernschicht (13) genauso dünn wie oder dünner als die erste Blende (11) und/oder genauso dick wie oder dicker als die zweite Blende (15) ist, und **dadurch gekennzeichnet, dass** die erste Blende (11) mit der ersten Strukturschaumschicht (12) schmelzverbunden ist und die zweite Blende (15) mit der zweiten Strukturschaumschicht (14) schmelzverbunden ist.

2. Verbundplatte nach Anspruch 1, wobei mindestens zwei von der ersten Blende (11), der zweiten Blende (15) und der Kernschicht (13) unterschiedliche Dicken aufweisen.

3. Verbundplatte nach einem der Ansprüche 1 oder 2, wobei die erste Strukturschaumschicht (12) dicker als, gleich dick wie oder dünner als die zweite Strukturschaumschicht (14) ist.

4. Verbundplatte nach einem der Ansprüche 1, 2 oder 3, wobei die Dichte der ersten Strukturschaumschicht (12) größer als, gleich wie oder kleiner als die der zweiten Strukturschaumschicht (14) ist.

5. Verbundplatte nach einem der vorhergehenden Ansprüche, wobei die erste Blende (11), die zweite Blende (15) und/oder der Metallkern (13) aus Aluminium gebildet sind/ist.

6. Verbundplatte nach einem der vorhergehenden Ansprüche, wobei der Metallkern (13) ausgewählt ist aus (i) einem einfachen Blech oder (ii) einem geformten Blech, beispielsweise einem Blech, das durch Kaltwalzen, Rändeln oder Prägen geformt ist, um quer über dem gesamten Blechmaterial oder einem Abschnitt davon lokale Formationen bereitzustellen.

7. Verbundplatte nach einem der vorhergehenden Ansprüche, wobei die erste Blende (11) eine Dicke von 0,5 bis 10 mm aufweist, z. B. eine Dicke von 0,5 bis 4 mm, und/oder die zweite Blende 15 eine Dicke von 0,5 bis 20 mm aufweist, z. B. ein Häkchen von 0,5 bis 3 mm.

8. Verbundplatte nach einem der vorhergehenden Ansprüche, wobei eine oder beide von den Strukturschaumschichten (12, 14) aus einem Material gebildet sind, das aus Polyethylenterephthalat, Polyurethan, Acrylnitril-Butadien-Styrol (ABS), Polystyrol (PS), Polycarbonat (PC), Polypropylen (PP) oder Polyvinylchlorid (PVC) sowie Mischungen derselben ausgewählt ist.

9. Verbundplatte nach einem der vorhergehenden Ansprüche, wobei eine oder beide von der ersten Strukturschaumschicht (12) oder der zweiten Strukturschaumschicht (14) Einlagen, z. B. Schaumstoffeinlagen, zur Aufnahme von Befestigungsmitteln, wie etwa Schrauben, umfassen.

10. Verbundplatte nach Anspruch 9, umfassend einen ersten Umfangsrand zum Montieren von Scharnieren, wobei die Einlagen an dem Umfangsrand oder in Richtung davon angeordnet sein können und wobei es sich bei den Einlagen um Schaumstoffeinlagen handeln kann, die sich mindestens in dem Bereich, in dem Scharniere erforderlich sind, entlang des Umfangsrandes erstrecken, und/oder wobei die Schaumstoffeinlagen eine höhere Dichte als die von entweder einer oder beiden von der ersten und zweiten Strukturschaumschicht aufweisen können.

11. Verbundplatte nach einem der vorhergehenden Ansprüche, ferner umfassend eine Verkleidung (16), die sich um die Platte erstreckt, beispielsweise über einen Umfangsrand, zwei, drei oder alle Umfangsränder (5, 6, 7) der Platte.

12. Verbundplatte nach einem der vorhergehenden Ansprüche, wobei eine oder beide von der ersten Blende (11) und/oder der zweiten Blende (15) mit einer dekorativen oder funktionellen Beschichtung bereitgestellt sind/ist.

13. Verfahren zum Bilden einer Verbundplatte nach einem der Ansprüche 1-12, wobei das Verfahren die folgenden Schritte umfasst:
a. Erhitzen eines ersten Strukturblechelements (11) und Bringen davon in engen Kontakt mit einer ersten Strukturschaumschicht (12), wodurch eine erste Fläche der Schaumschicht (12A) geschmolzen wird, um das erste Strukturblechelement (11) an der ersten Strukturschaumschicht (12) zu befestigen;
b. Bereitstellen eines zweiten Strukturblechelements (13) und Bringen davon in engen Kontakt mit der ersten Strukturschaumschicht (12), um eine zweite Fläche der Schaumschicht (12B) an dem zweiten Strukturblechelement (13) zu befestigen;
c. Erhitzen eines dritten Strukturblechelements (15) und Bringen davon in engen Kontakt mit einer zweiten Strukturschaumschicht (14), wodurch eine erste Fläche der zweiten Strukturschaumschicht (14A) geschmolzen wird, um das dritte Strukturblechelement (15) an der zweiten Strukturschaumschicht (14) zu befestigen;
d. Befestigen des zweiten Strukturblechelements (13) an der zweiten Strukturschaumschicht (14).

14. Verfahren nach Anspruch 13, wobei Schritt b) Erhitzen des zweiten Strukturblechelements (13) und Bringen davon in engen Kontakt mit der ersten Strukturschaumschicht (12) umfasst, wodurch eine zweite Fläche der Schaumschicht (12B) geschmolzen wird, um das zweite Strukturblechelement (13) an der ersten Strukturschaumschicht (12) zu befestigen.

15. Verfahren nach einem der Ansprüche 13 oder 14, wobei Schritt d) Erhitzen des zweiten Strukturblechelements (13) und Bringen davon in engen Kontakt mit der zweiten Strukturschaumschicht (14) umfasst, wodurch eine zweite Fläche der zweiten Strukturschaumschicht (14B) geschmolzen wird, um das zweite Strukturblechelement (13) an der zweiten Strukturschaumschicht (14) zu befestigen.

## Revendications

1. Panneau composite comprenant une première face (11) et une seconde face (15) dont au moins l'une est formée à partir d'un matériau de feuille structurale métallique, située entre la première et la seconde face (11, 15) se trouvent une première couche de mousse structurale (12), une couche de noyau métallique (13) et une seconde couche de mousse structurale (14), la couche de noyau métallique (13) étant aussi fine ou plus fine que la première face (11) et/ou aussi épaisse ou plus épaisse que la seconde face (15) et **caractérisé en ce que** la première face (11) est liée par fusion à la première couche de mousse structurale (12) et la seconde face (15) est liée par fusion à la seconde couche de mousse structurale (14).

2. Panneau composite selon la revendication 1, au moins deux de la première face (11), de la seconde face (15) et de la couche centrale (13) possédant des épaisseurs différentes.

3. Panneau composite selon l'une quelconque des revendications 1 ou 2, ladite première couche de mousse structurale (12) étant plus épaisse, de la même épaisseur ou plus mince que la seconde couche de mousse structurale (14).

4. Panneau composite selon l'une quelconque des revendications 1, 2 ou 3, ladite densité de la première couche de mousse structurale (12) étant supérieure, égale ou inférieure à celle de la seconde couche de mousse structurale (14).

5. Panneau composite selon une quelconque revendication précédente, ladite première face (11), ladite seconde face (15) et/ou ledit noyau métallique (13) étant formés d'aluminium.

6. Panneau composite selon une quelconque revendication précédente, ledit noyau métallique (13) étant choisi parmi (i) une feuille simple ou (ii) une feuille façonnée, par exemple une feuille façonnée par laminage à froid, moletage ou gaufrage pour fournir des formations locales à travers tout le matériau de feuille ou une partie de ce-dernier.

7. Panneau composite selon une quelconque revendication précédente, ladite première face (11) possédant une épaisseur allant de 0,5 à 10 mm, par exemple une épaisseur allant de 0,5 à 4 mm et/ou la seconde face 15 possédant une épaisseur allant de 0,5 à 20 mm, par exemple une épaisseur allant de 0,5 à 3 mm.

8. Panneau composite selon une quelconque revendication précédente, l'une ou les deux des couches de mousse structurales (12, 14) étant formées d'un matériau choisi parmi le téréphtalate de polyéthylène, le polyuréthane, l'acrylonitrile-butadiène-styrène (ABS), le polystyrène (PS), le polycarbonate (PC), le polypropylène (PP) ou le polychlorure de vinyle (PVC) et des mélanges de ceux-ci.

9. Panneau composite selon une quelconque revendication précédente, l'une ou les deux de la première couche de mousse structurale (12) ou de la seconde couche de mousse structurale (14) comprenant des inserts, par exemple des inserts en mousse, pour le maintien de moyens de fixation, tels que des vis.

10. Panneau composite selon la revendication 9, comprenant un premier bord périphérique destiné au montage de charnières, lesdits inserts pouvant être situés au niveau du bord périphérique ou vers celui-ci et lesdits inserts pouvant être des inserts en mousse qui s'étendent le long du bord périphérique, au moins dans la zone où des charnières sont requises et/ou lesdits inserts en mousse étant susceptibles de posséder une densité supérieure à celle de l'une et/ou l'autre des première et seconde couches de mousse structurales.

11. Panneau composite selon une quelconque revendication précédente, comprenant en outre une garniture (16) s'étendant autour du panneau, par exemple sur un, deux, trois ou tous les bords périphériques (5, 6, 7) du panneau.

12. Panneau composite selon une quelconque revendication précédente, l'une ou les deux de la première face (11) et/ou de la seconde face (15) étant dotées d'un revêtement décoratif ou fonctionnel.

13. Procédé de formation d'un panneau composite selon l'une quelconque des revendications 1-12, le procédé comprenant les étapes de :
a. chauffage d'un premier élément de feuille structurale (11) et sa mise en contact intime avec une première couche de mousse structurale (12) moyennant quoi une première surface de la couche de mousse (12A) est fondue pour fixer le premier élément de feuille structurale (11) à la première couche de mousse structurale (12) ;
b. fourniture d'un deuxième élément de feuille structurale (13) et sa mise en contact intime avec la première couche de mousse structurale (12) pour fixer une seconde surface de la couche de mousse (12B) au deuxième élément de feuille structurale (13) ;
c. chauffage d'un troisième élément de feuille structurale (15) et sa mise en contact intime avec une seconde couche structurale en mousse (14) moyennant quoi une première surface de la seconde couche structurale en mousse (14A) est fondue pour fixer le troisième élément de feuille structurale (15) à la seconde couche de mousse structurale (14) ;
d. fixation du deuxième élément de feuille structurale (13) à la seconde couche de mousse structurale (14).

14. Procédé selon la revendication 13, ladite étape b) comprenant le chauffage du deuxième élément de feuille structurale (13) et sa mise en contact intime avec la première couche de mousse structurale (12), moyennant quoi une seconde surface de la couche de mousse (12B) est fondue pour fixer le deuxième élément de feuille structurale (13) à la première couche de mousse structurale (12).

15. Procédé selon l'une quelconque des revendications 13 ou 14, ladite étape d) comprenant le chauffage du deuxième élément de feuille structurale (13) et sa mise en contact intime avec la seconde couche de mousse structurale (14) moyennant quoi une seconde surface de la seconde couche de mousse structurale (14B) est fondue pour fixer le deuxième élément de feuille structurale (13) à la seconde couche de mousse structurale (14).
